# FASCICULE DE BREVET EUROPEEN

(11) **EP 2 435 763 B1**
(45) Date de publication et mention de la délivrance du brevet: **27.04.2016**
(21) Numéro de dépôt: 10724003.8
(22) Date de dépôt: 25.05.2010
(51) Int. Cl.: F28D 20/00, F28D 21/00, F24D 17/00

(54) **RÉCUPERATION DE LA CHALEUR DES EAUX USÉES**
WÄRMERÜCKGEWINNUNG AUS ABWASSER
RECUPERATION OF HEAT FROM SEWAGE WATER

(30) Priorité: 26.05.2009 FR 0902563
(43) Date de publication de la demande: 04.04.2012
(73) Titulaire: Commissariat à l'Énergie Atomique et aux Énergies Alternatives, 75015 Paris (FR)
(72) Inventeur: CLAUDON, Fabrice, F-73290 La Motte Servolex (FR)
(74) Mandataire: Novaimo
(86) Numéro de dépôt international: PCT/EP2010/057165
(87) Numéro de publication internationale: WO 2010/136456

(56) Documents cités:
- DE-A1- 2 538 168
- DE-A1- 3 316 704
- DE-A1- 4 135 560
- GB-A- 2 402 204

## Description

L'invention concerne un dispositif de récupération de chaleur, particulièrement adapté à la récupération de la chaleur des eaux usées. Elle concerne aussi un procédé de récupération de la chaleur des eaux usées.

Les eaux usées provenant d'un ou plusieurs bâtiments regroupent les eaux provenant des douches, bains, éviers, des lave vaisselles, lave linges...Ces eaux peuvent être chaudes ou froides et il existe des dispositifs de récupération de leur chaleur, notamment en vue de préchauffer l'eau chaude sanitaire destinée à réalimenter ce ou ces bâtiments.

Les dispositifs existants de récupération de chaleur sont disposés à différents endroits plus ou moins éloignés de la source d'eaux usées : ils peuvent se trouver soit directement à leur sortie, au niveau d'une douche ou d'une baignoire, soit plus éloignés, au niveau d'évacuations principales.

Une solution courante de l'état de la technique consiste à faire circuler toutes les eaux usées dans un échangeur de chaleur, dans le but de récupérer leur chaleur. L'inconvénient de cette solution est qu'elle est non optimisée car lorsque de l'eau froide est présente dans les eaux usées, son rendement baisse très nettement. En effet, une particularité de la gestion des eaux usées provient du fait qu'elles peuvent recevoir des eaux à différentes températures, allant de températures froides proches de la température des eaux à préchauffer.

Le document DE 4 135 560 A1 montre un dispositif selon le préamble de la revendication 1 et un procédé selon le préambule de la revendication 9.

Ainsi, un objet général de l'invention est de proposer une solution pour récupérer la chaleur des eaux usées selon un rendement amélioré par rapport aux solutions de l'état de la technique.

A cet effet, l'invention repose sur un dispositif de récupération de chaleur provenant des eaux usées, caractérisé en ce qu'il comprend une cuve comprenant au moins deux parties, une partie inférieure destinée à stocker les eaux usées froides séparée par une plaque de stratification d'une partie supérieure destinée à stocker les eaux usées chaudes, séparées par stratification, en ce qu'il comprend un conduit pour orienter les eaux usées vers la partie inférieure de la cuve et en ce qu'il comprend un échangeur de chaleur disposé dans la partie supérieure.

Cette plaque de stratification peut être en métal d'épaisseur comprise entre 0,8 et 1,2 millimètre.

La partie inférieure de la cuve peut comprendre un volume compris entre 20n et 30n litres et la partie supérieure peut comprendre un volume compris entre 40n et 60n litres, où n est le nombre d'habitants prévus pour le bâtiment.

De plus, le dispositif de récupération de chaleur peut comprendre une entrée pour les eaux usées, un conduit pour orienter les eaux usées vers la partie inférieure de la cuve et une sortie pour évacuer les eaux usées.

La cuve peut être principalement en matériau plastique comme du PVC.

La paroi de la cuve peut comprendre un isolant équivalent à une mousse de polyuréthane de 100 millimètres d'épaisseur.

L'échangeur de chaleur peut comprendre un serpentin en cuivre. Il peut comprendre une entrée pour le circuit d'eau chaude sanitaire et une sortie vers le circuit d'eau chaude sanitaire pour transmettre l'eau sanitaire préchauffée vers le circuit d'eau chaude sanitaire.

L'invention porte aussi sur un procédé de récupération de chaleur provenant des eaux usées, caractérisé en ce qu'il comprend les étapes suivantes :
- séparation des eaux usées chaudes des eaux usées froides par stratification;
- transfert de la chaleur des eaux usées chaudes vers un fluide à préchauffer.

La première étape peut consister à séparer et stocker les eaux chaudes et froides dans deux parties distinctes d'une même cuve, et la seconde étape peut consister à récupérer la chaleur des eaux chaudes par l'intermédiaire d'un échangeur de chaleur disposé dans la partie chaude.

La première étape peut comprendre une étape préalable de conduite des eaux usées chaudes et froides dans la même partie inférieure d'une même cuve avant d'obtenir leur séparation telle que mentionnée précédemment.

Ces objets, caractéristiques et avantages de la présente invention seront exposés en détail dans la description suivante d'un mode d'exécution particulier fait à titre non-limitatif en relation avec l'unique figure jointe qui représente schématiquement un dispositif de récupération de la chaleur des eaux usées selon un mode d'exécution de l'invention.

L'invention repose sur le concept de séparer les eaux usées chaudes et froides afin de permettre la récupération optimisée de la chaleur des eaux usées chaudes.

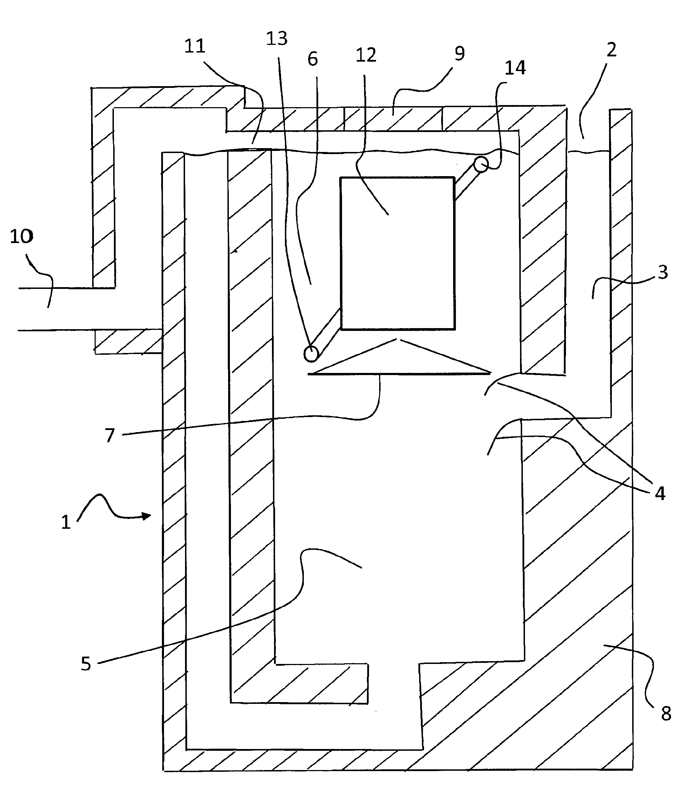

Le mode d'exécution décrit en référence avec la figure 1 repose sur une cuve de stockage et récupération de chaleur 1 qui comprend principalement deux zones, une zone dans laquelle est stockée la partie chaude des eaux usées et une zone dans laquelle est stockée la partie froide.

Les eaux usées arrivent par une entrée 2 positionnée dans sa partie supérieure et sont guidées par un conduit 3 puis une canne directionnelle 4 vers une partie inférieure 5 du volume de stockage de la cuve 1. Cette partie inférieure est aussi appelée zone tampon 5. Elle permet la séparation des eaux chaudes et froides par stratification. Les eaux chaudes remontent et se retrouvent stockées dans la partie haute 6 de la cuve 1, séparées de la zone tampon 5 par une plaque de séparation ou stratification 7. Au-dessus de cette dernière se trouve un toit présentant deux pentes vers le bas afin d'éviter la retenue de déchets dans la partie haute 6 de la cuve. Le volume de stockage de la cuve est fermé par des parois calorifugées 8 limitant les pertes de chaleur.

La cuve est équipée d'une trappe de visite 9 pour sa maintenance et notamment son nettoyage. Un canal de recirculation 11 est positionné entre le volume de stockage et l'évacuation 10 afin de limiter l'encrassement de la cuve. Un filtre, non représenté, peut être prévu en amont de la cuve pour empêcher l'entrée des déchets. Une vanne de vidange peut être prévue pour la vidange de la cuve lors d'opérations d'entretien.

La partie haute 6 de la cuve est donc la partie chaude de la cuve. Elle permet de conserver les eaux usées chaudes. Dans cette partie, un échangeur 12 est aménagé, dans lequel l'eau chaude sanitaire entre par une entrée 13 et ressort par une sortie 14 pour recevoir la chaleur transmise par les eaux usées chaudes. Cet échangeur 12 permet ainsi de préchauffer l'eau chaude sanitaire. Cette partie haute 6 de la cuve reste à une température élevée et peu variable, ce qui assure une récupération optimale et stable de chaleur pour le préchauffage.

Le volume de la cuve est dimensionné pour une optimisation de son efficacité. La zone tampon 5 a pour fonction le stockage des eaux usées froides : elle doit avoir un volume suffisant pour assurer la bonne séparation des eaux chaudes et froides mais pas trop grand pour ne pas augmenter l'encombrement et le coût de l'ensemble. Dans le cas de l'arrivée d'eaux usées froides, ces eaux doivent pouvoir s'écouler sans perturber la zone chaude de la cuve. Un volume de 100 litres est bien adapté pour une maison de quatre occupants. Plus généralement, un volume entre 80 et 120 litres pourrait convenir dans un tel exemple.

De même, le volume de la zone chaude est important : il doit représenter un bon compromis pour permettre le stockage d'une quantité suffisante d'eaux chaudes sans générer trop de pertes thermiques. Ainsi un volume de 200 litres serait bien adapté à une maison de quatre occupants. Plus généralement, un volume entre 160 et 240 litres pourrait convenir dans cet exemple.

Cette solution a été décrite ci-dessus à titre d'exemple pour une habitation individuelle. Toutefois, elle convient parfaitement à un habitat collectif comme un immeuble, pour l'industrie ou le tertiaire. Ainsi, pour n personnes concernées par le bâtiment, la cuve pourrait présenter un volume de sa zone tampon 5 compris entre 20n et 30n et/ou un volume de la zone chaude 6 compris entre 40n et 60n.

Ce dispositif de récupération de chaleur peut être disposé au niveau d'une cave du bâtiment concerné, ou à l'extérieur.

La cuve peut être réalisée en matériau plastique, comme du PVC par exemple, isolé par une jaquette en mousse de polyuréthane de 100 millimètres d'épaisseur, ou en variante par tout isolant équivalent. L'échangeur peut comprendre une partie de type serpentin en cuivre. Les différents raccordements peuvent être en matériau plastique, comme du PVC. La plaque de stratification peut être en métal, dont l'épaisseur est de l'ordre du millimètre, c'est-à-dire comprise entre 0,8 et 1,2 millimètre. La cuve peut présenter une forme cylindrique, de section circulaire, la plaque de stratification présentant alors aussi une forme circulaire. La cuve a été décrite dans un mode d'exécution comprenant deux zones distinctes, séparées par une plaque de séparation. En variante, ces deux zones pourraient ne pas être séparées. De plus, il est possible d'imaginer plus de deux zones pour des applications nécessitant plusieurs niveaux de température chaude.

L'invention a été illustrée dans le cadre de la récupération de la chaleur des eaux usées pour préchauffer l'eau chaude sanitaire. Toutefois, cette récupération de chaleur pourrait être utilisée pour tout autre besoin calorifique.

L'invention porte aussi sur le procédé de récupération de la chaleur des eaux usées d'un bâtiment, caractérisé en ce qu'il comprend les étapes suivantes :
- séparation des eaux usées chaudes des eaux usées froides par stratification;
- transfert de la chaleur des eaux usées chaudes vers un fluide à préchauffer.

Finalement, la présente invention atteint bien l'objet recherché. La partie haute de la cuve comprend les eaux usées chaudes, non influencées par un écoulement d'eaux usées froides, ce qui permet son maintien à une température élevée qui optimise le transfert thermique vers l'eau sanitaire à chauffer. La chaleur des eaux usées n'est pas perdue dans un mélange avec les eaux usées froides mais récupérée de manière optimale. Cela permet de récupérer environ 75% des calories perdues dans les eaux usées. De plus, le dispositif est peu encombrant et peu coûteux, est adapté à une installation facile pour tout bâtiment.

## Revendications

1. Dispositif de récupération de chaleur provenant des eaux usées, qui comprend une cuve (1) comprenant au moins deux parties, une partie inférieure (5) destinée à stocker les eaux usées froides séparée par une plaque de stratification (7) d'une partie supérieure (6) destinée à stocker les eaux usées chaudes, séparées par stratification, et qui comprend un échangeur de chaleur (12) disposé dans la partie supérieure (6), **caractérisé en ce qu'**il comprend un conduit (3) pour orienter l'ensemble des eaux usées entrantes vers la partie inférieure (5) de la cuve (1).

2. Dispositif de récupération de chaleur selon la revendication précédente, **caractérisé en ce que** la plaque de stratification (7) est en métal d'épaisseur comprise entre 0,8 et 1,2 millimètre.

3. Dispositif de récupération de chaleur selon l'une des revendications précédentes, **caractérisé en ce qu'**il est adapté pour un bâtiment de n habitants, et **en ce que** la partie inférieure (5) comprend un volume compris entre 20n et 30n litres et/ou **en ce que** la partie supérieure (6) comprend un volume compris entre 40n et 60n litres.

4. Dispositif de récupération de chaleur selon l'une des revendications précédentes, **caractérisé en ce qu'**il comprend une entrée (2) pour les eaux usées et une sortie (10) pour évacuer les eaux usées.

5. Dispositif de récupération de chaleur selon l'une des revendications précédentes, **caractérisé en ce que** la cuve (1) est principalement en matériau plastique comme du PVC.

6. Dispositif de récupération de chaleur selon l'une des revendications précédentes, **caractérisé en ce que** la paroi de la cuve (1) comprend un isolant équivalent à une mousse de polyuréthane de 100 millimètres d'épaisseur.

7. Dispositif de récupération de chaleur selon l'une des revendications précédentes, **caractérisé en ce que** l'échangeur de chaleur (12) comprend un serpentin en cuivre.

8. Dispositif de récupération de chaleur selon l'une des revendications précédentes, **caractérisé en ce que** l'échangeur de chaleur (12) comprend une entrée (13) pour le circuit d'eau chaude sanitaire et une sortie (14) adaptée pour une liaison avec un circuit d'eau chaude sanitaire pour transmettre l'eau sanitaire préchauffée vers ce circuit d'eau chaude sanitaire.

9. Procédé de récupération de chaleur provenant des eaux usées, **caractérisé en ce qu'**il comprend l'utilisation d'un dispositif de récupération de chaleur selon l'une des revendications précédentes et met en oeuvre les étapes suivantes :
- conduite de l'ensemble des eaux usées entrantes vers la partie inférieure (5) d'une cuve (1) dudit dispositif de récupération de chaleur ;
- séparation des eaux usées chaudes des eaux usées froides par stratification;
- transfert de la chaleur des eaux usées chaudes vers un fluide à préchauffer.

10. Procédé de récupération de chaleur selon la revendication précédente, **caractérisé en ce que** la seconde étape consiste à séparer et stocker les eaux chaudes et froides dans deux parties distinctes (5, 6) d'une même cuve (1), et **en ce que** la troisième étape consiste à récupérer la chaleur des eaux chaudes par l'intermédiaire d'un échangeur de chaleur (12) disposé dans la partie chaude (6).

## Patentansprüche

1. Vorrichtung zur Wärmerückgewinnung aus Brauchwasser, die einen Bottich (1) umfasst, der wenigstens zwei Teile enthält, wovon ein unterer Teil (5) dazu bestimmt ist, kaltes Brauchwasser aufzubewahren, und durch eine Schichtungsplatte (7) von einem oberen Teil (6) getrennt ist, der dazu bestimmt ist, heißes Brauchwasser aufzubewahren, das durch Schichtbildung getrennt ist, und einen Wärmetauscher (12) umfasst, der im oberen Teil (6) angeordnet ist, **dadurch gekennzeichnet, dass** sie eine Leitung (3) umfasst, um das gesamte Brauchwasser, das in den unteren Teil (5) des Bottichs (1) eintritt, zu leiten.

2. Wärmerückgewinnungsvorrichtung nach dem vorhergehenden Anspruch, **dadurch gekennzeichnet, dass** die Schichtplatte (7) aus einem Metall mit einer Dicke im Bereich von 0,8 bis 1,2 Millimetern besteht.

3. Wärmerückgewinnungsvorrichtung nach einem der vorhergehenden Ansprüche, **dadurch gekennzeichnet, dass** sie für ein Gebäude mit n Bewohnern ausgelegt ist und dass der untere Teil (5) ein Volumen im Bereich von 20n bis 30n Liter enthält und/oder dass der obere Teil (6) ein Volumen im Bereich von 40n bis 60n Liter enthält.

4. Wärmerückgewinnungsvorrichtung nach einem der vorhergehenden Ansprüche, **dadurch gekennzeichnet, dass** sie einen Einlass (2) für Brauchwasser und einen Auslass (10), um das Brauchwasser abzuführen, umfasst.

5. Wärmerückgewinnungsvorrichtung nach einem der vorhergehenden Ansprüche, **dadurch gekennzeichnet, dass** der Bottich (1) hauptsächlich aus Kunststoff wie etwa PVC besteht.

6. Wärmerückgewinnungsvorrichtung nach einem der vorhergehenden Ansprüche, **dadurch gekennzeichnet, dass** die Wand des Bottichs (1) einen Isolator aufweist, der zu einem Polyurethanschaumstoff mit einer Dicke von 100 Millimetern äquivalent ist.

7. Wärmerückgewinnungsvorrichtung nach einem der vorhergehenden Ansprüche, **dadurch gekennzeichnet, dass** der Wärmetauscher (12) eine Kupferschlange enthält.

8. Wärmerückgewinnungsvorrichtung nach einem der vorhergehenden Ansprüche, **dadurch gekennzeichnet, dass** der Wärmetauscher (12) einen Einlass (13) für den Heißwasser-Sanitärkreis und einen Auslass (14), der für eine Verbindung mit einem Heißwasser-Sanitärkreis ausgelegt ist, um vorerwärmtes Sanitärwasser zu diesem Heißwasser-Sanitärkreis zu übertragen, umfasst.

9. Verfahren zum Rückgewinnen von Wärme, die von Brauchwasser stammt, **dadurch gekennzeichnet, dass** es die Verwendung einer Wärmerückgewinnungsvorrichtung nach einem der vorhergehenden Ansprüche umfasst und die folgenden Schritte ausführt:
- Leiten des gesamten eintretenden Brauchwassers zu dem unteren Teil (5) eines Bottichs (1) der Wärmerückgewinnungsvorrichtung;
- Trennen von heißem Brauchwasser von kaltem Brauchwasser durch Schichtbildung;
- Übertragen der Wärme des heißen Brauchwassers an ein vorzuerwärmendes Fluid.

10. Wärmerückgewinnungsverfahren nach dem vorhergehenden Anspruch, **dadurch gekennzeichnet, dass** der zweite Schritt darin besteht, das heiße Wasser und das kalte Wasser in den zwei verschiedenen Teilen (5, 6) desselben Bottichs (1) aufzubewahren, und dass der dritte Schritt darin besteht, die Wärme des heißen Wassers über einen Wärmetauscher (12), der im heißen Teil (6) angeordnet ist, wiederzugewinnen.

## Claims

1. Device for recovering heat originating from wastewater, which comprises a tank (1) comprising at least two portions, a bottom portion (5) intended to store the cold wastewater, separated by a stratification plate (7) from a top portion (6) intended to store the hot wastewater, being separated by stratification, and which comprises a heat exchanger (12) placed in the top portion (6), **characterized in that** it comprises a duct (3) for orienting all of the wastewater entering towards the bottom portion (5) of the tank (1).

2. Device for recovering heat according to the preceding claim, **characterized in that** the stratification plate (7) is made of metal with a thickness of between 0.8 and 1.2 millimetres.

3. Device for recovering heat for a building according to one of previous claims, **characterized in that** it is adapted for a building of n inhabitants, and **in that** the bottom portion (5) comprises a volume of between 20n and 30n litres and/or **in that** the top portion (6) comprises a volume of between 40n and 60n litres.

4. Device for recovering heat according to one of previous claims, **characterized in that** it comprises an inlet (2) for the wastewater and an outlet (10) for draining the wastewater.

5. Device for recovering heat according to one of previous claims, **characterized in that** the tank (1) is mainly made of plastic such as PVC.

6. Device for recovering heat according to one of previous claims, **characterized in that** the wall of the tank (1) comprises an insulator equivalent to a polyurethane foam that is 100 millimetres thick.

7. Device for recovering heat according to one of previous claims, **characterized in that** the heat exchanger (12) comprises a copper coil.

8. Device for recovering heat according to one of previous claims, **characterized in that** the heat exchanger (12) comprises an inlet (13) for the domestic hot water circuit and an outlet (14) adapted to the domestic hot water circuit in order to transmit the preheated domestic water to the domestic hot water circuit.

9. Method for recovering heat originating from wastewater, **characterized in that** it comprises the use of a device for recovering heat according to one of previous claims and comprises the following steps:
- conduct of all of the wastewater in the bottom portion (5) of a tank (1) of said device for recovering heat;
- separation of the hot wastewater from the cold wastewater by stratification;
- transfer of the heat from the hot wastewater to a fluid to be preheated.

10. Method for recovering heat according to the preceding claim, **characterized in that** the second step consists in separating and storing the hot and cold water in two distinct portions (5, 6) of one and the same tank (1), and **in that** the third step consists in recovering the heat from the hot water by means of a heat exchanger (12) placed in the hot portion (6).
